# EUROPÄISCHE PATENTSCHRIFT

(11) **EP 3 596 368 B1**
(45) Veröffentlichungstag und Bekanntmachung des Hinweises auf die Patenterteilung: **06.09.2023**
(21) Anmeldenummer: 18717520.3
(22) Anmeldetag: 09.03.2018
(51) Int. Cl.: F16K 31/60, F16K 31/05

(54) **VERSTELLEINHEIT FÜR EINE SANITÄRARMATUR**
REGULATING UNIT FOR A SANITARY FITTING
UNITÉ D'AJUSTEMENT POUR UN ROBINET SANITAIRE

(30) Priorität: 13.03.2017 DE 102017105311
(43) Veröffentlichungstag der Anmeldung: 22.01.2020
(73) Patentinhaber: Aloys F. Dornbracht, 58640 Iserlohn (DE)
(72) Erfinder: SCHMERMUND, Andreas, 58644 Iserlohn (DE)
(74) Vertreter: Gottschald Patentanwälte Partnerschaft mbB
(86) Internationale Anmeldenummer: PCT/EP2018/055913
(87) Internationale Veröffentlichungsnummer: WO 2018/166913

(56) Entgegenhaltungen:
- WO-A1-2009/074015
- US-A- 4 945 943
- US-E- R E37 888

## Beschreibung

Die Erfindung betrifft eine Verstelleinheit für eine Sanitärarmatur gemäß dem Oberbegriff von Anspruch 1, eine Sanitärarmatur gemäß dem Oberbegriff von Anspruch 15 sowie eine Sanitärvorrichtung gemäß dem Oberbegriff von Anspruch 17.

Verstelleinheiten für Sanitärarmaturen sind aus dem Stand der Technik allgemein bekannt. Mit diesen kann in der Regel eine Wassertemperatur und/oder eine Durchflussmenge von Wasser zu einem Wasserauslass einer Dusch- und/oder Badevorrichtung geregelt werden. Zumeist werden diese Verstelleinheiten manuell verstellt.

Aus der US 4,945,943 ist auch eine Verstelleinheit für eine Sanitärarmatur bekannt, mit welcher die Sanitärarmatur nicht nur manuell, sondern auch motorisch verstellt werden kann.

Ferner ist auch in der US 5,944,255 eine Verstelleinheit für eine Sanitärarmatur beschrieben, mit der die Sanitärarmatur nicht nur manuell, sondern auch motorisch verstellt werden kann.

An Badezimmer und deren Einrichtung werden zunehmend von den Käufern bzw. Endbenutzern hohe Anforderungen an das Design gestellt. Dabei werden die Sanitärarmaturen, ihre Verstelleinheiten und auch die den Sanitärarmaturen zugeordneten Wasserauslassvorrichtungen auch optisch aufeinander abgestimmt. Die in der US 4,945,943 und der der US 5,944,255 beschriebenen Verstelleinheiten weisen konstruktionsbedingt im Verhältnis zu rein manuellen Verstelleinheiten sehr große Abmessungen auf und werden damit von den Benutzern als optisch störende Fremdkörper wahrgenommen.

Weitere Verstelleinheiten in Kombination mit Sanitärarmaturen sind aus der WO 2009/074015 A1, der US 4 945 943 A und der US R E37 888 E bekannt.

Die Aufgabe der vorliegenden Erfindung ist es, eine kompakte und ästhetisch ansprechende Verstelleinheit zu schaffen, welche sich in das Gesamtbild eines Badezimmers integriert.

Bei einer Verstelleinheit gemäß dem Oberbegriff von Anspruch 1 wird die Aufgabe durch den kennzeichnenden Teil von Anspruch 1 gelöst.

Dadurch, dass das Stellelement den Aktor und/oder die Steuereinheit und/oder den Energiespeicher zumindest radial bezogen auf das Stellglied im Wesentlichen vollständig umgibt, kann eine besonders kompakte Verstelleinheit geschaffen werden, welche sowohl ein manuelles Verstellen der Sanitärarmatur ohne Komforteinbußen ermöglicht, als auch rein motorisch betrieben werden kann. Durch eine solch kompakte Ausgestaltung, passt sich die Verstelleinheit besser in das Gesamtbild eines modernen Badezimmers ein. Es ist sogar möglich, die Verstelleinheit in den Dimensionen eines üblichen manuellen Verstellknaufs auszubilden.

In einer Weiterbildung der Erfindung gemäß Anspruch 2 wird vorgeschlagen, dass die Verstelleinheit ein Gehäuse aufweist, vorzugsweise, dass das Stellelement zumindest einen Teil des Gehäuses der Verstelleinheit bildet, und/oder, dass das Stellelement die Stellgliedschnittstelle umgibt.

In den Ansprüchen 3 und 4 sind weitere bevorzugte Ausgestaltungen des Stellelements beschrieben.

Die Ansprüche 5 und 6 beschreiben bevorzugte Anbindungen der Verstelleinheit an die Sanitärarmatur.

In den Ansprüchen 7 und 8 sind bevorzugte Anordnungen des Aktors und/oder des Energiespeichers und/oder der Steuereinheit beschrieben. Ferner kann die Verstelleinheit ein Getriebe aufweisen, wie dies im Anspruch 9 beschrieben ist.

Gemäß den Ansprüchen 10 und 11 kann eine Benutzerschnittstelle und/oder eine Force-Feedback-Einheit vorgesehen sein.

Während Anspruch 12 eine Funkschnittstelle und/oder kabelgebundene Schnittstelle vorschlägt, kann gemäß Anspruch 13 ein Szenengenerator vorgesehen sein oder mittels der Funkschnittstelle und/oder die kabelgebundene Schnittstelle eine Verbindung zu dem Szenengenerator herstellbar sein.

Gemäß Anspruch 14 kann die Verstelleinheit im bestimmungsgemäß montierten Zustand wasserabweisend und/oder wasserdicht ausgebildet sein.

Darüber hinaus wird die eingangs genannte Aufgabe bei einer Sanitärarmatur durch die Merkmale von Anspruch 15 gelöst. Es ergeben sich die gleichen Vorteile, wie vorstehend im Zusammenhang mit der Verstelleinheit beschrieben.

Die Sanitärarmatur kann alle in Verbindung mit der Verstelleinheit beschriebenen Merkmale einzeln und/oder in Kombination aufweisen.

Im Anspruch 16 sind bevorzugte Formen des Zusammenwirkens der Verstelleinheit mit der Sanitärarmatur beschrieben.

Schließlich wird bei einer Sanitärvorrichtung, insbesondere einer Duschvorrichtung und/oder einer Badevorrichtung, gemäß dem Oberbegriff von Anspruch 17 die eingangs beschriebene Aufgabe durch die Merkmale des kennzeichnenden Teils von Anspruch 17 gelöst. Es ergeben sich die gleichen Vorteile, wie vorstehend im Zusammenhang mit der Verstelleinheit beschrieben.

Dabei kann die Sanitärvorrichtung alle Merkmale der beschriebenen Verstelleinheit und/oder der beschriebenen Sanitärarmatur einzeln und/oder in Kombination aufweisen.

Im Folgenden wird die Erfindung anhand einer lediglich bevorzugte Ausführungsbeispiele darstellenden Zeichnung näher erläutert. In der Zeichnung zeigt
- Fig. 1: ein Ausführungsbeispiel einer vorschlagsgemäßen Sanitärarmatur mit einer vorschlagsgemäßen Verstelleinheit,
- Fig. 2: eine Schnittdarstellung gemäß Fig. 1 eines ersten Ausfiihrungsbeispiels einer vorschlagsgemäßen Verstelleinheit und
- Fig. 3: eine Schnittdarstellung gemäß Fig. 1 eines zweiten Ausfiihrungsbeispiels einer vorschlagsgemäßen Verstelleinheit.

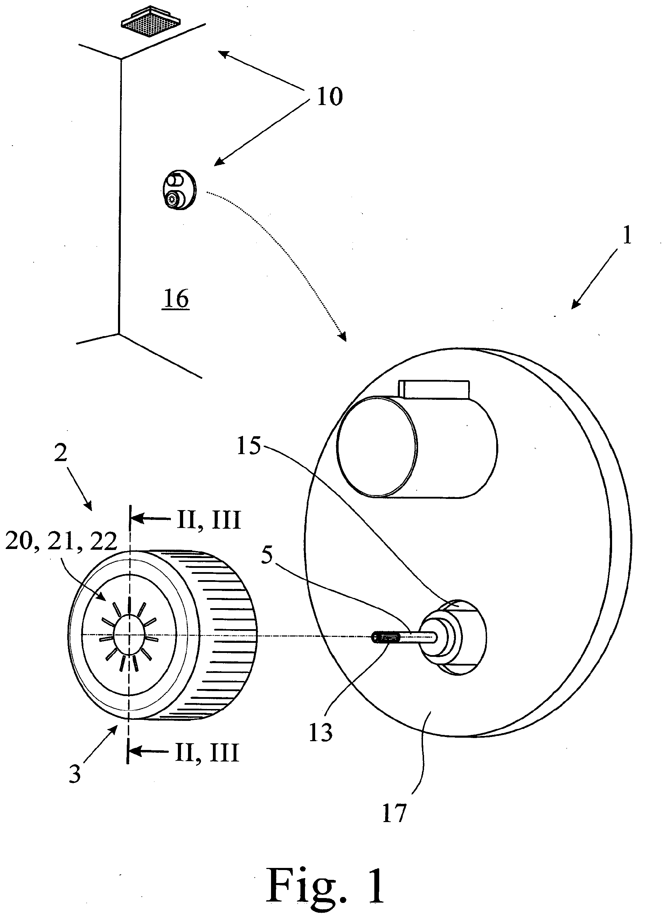

In der Fig. 1 ist eine perspektivische Ansicht einer vorschlagsgemäßen Sanitärarmatur mit einer vorschlagsgemäßen Verstelleinheit 2 gezeigt.

Die Sanitärarmatur kann grundsätzlich, wie in der Fig. 1 gezeigt, eine Unterputzarmatur oder eine Überputzarmatur sein.

Die Verstelleinheit weist ein Stellelement 3 zum manuellen Verstellen der Sanitärarmatur 1 auf. Ferner ist eine Stellgliedschnittstelle 4 zum Angreifen an ein Stellglied 5 zur Verstellung der Sanitärarmatur 1 vorgesehen. Ferner weist die Verstelleinheit 2 eine Festlegeschnittstelle 6 zum Herstellen einer drehfesten Verbindung zwischen der Verstelleinheit 2 und der Sanitärarmatur 1 auf.

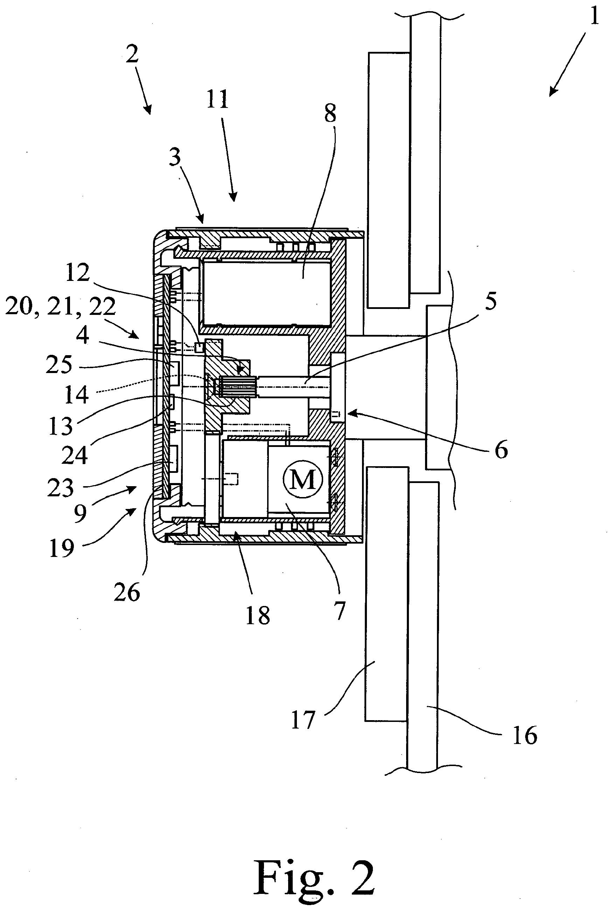

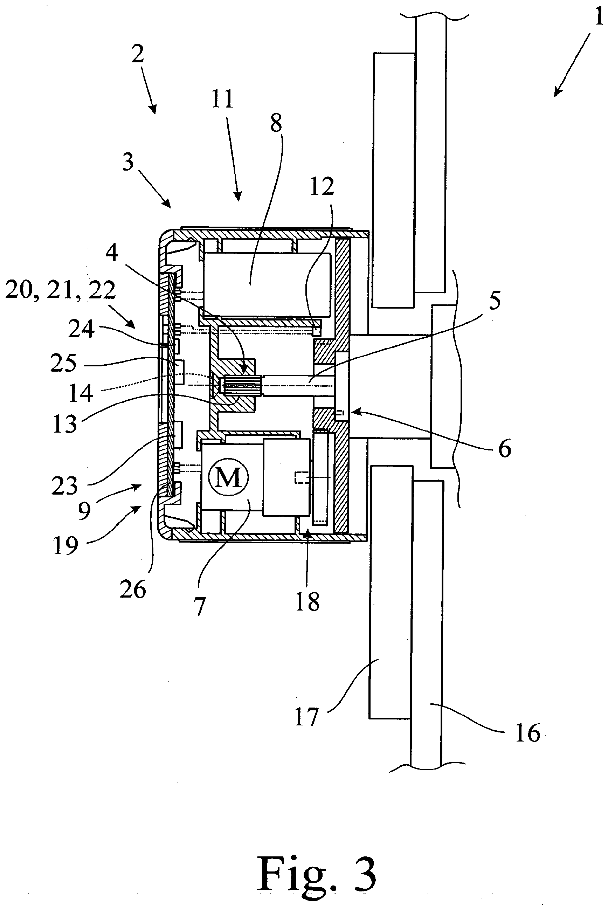

Wie in den Fig. 2 und 3 gezeigt, weist die Verstelleinheit 2 ferner einen Aktor 7, insbesondere einen Elektromotor, zum hier und vorzugsweise motorischen Verstellen der Sanitärarmatur 1, einen Energiespeicher 8, insbesondere eine Batterie, zur Energieversorgung des Aktors 7 und eine Steuereinheit 9 zum Steuern und/oder Regeln des Aktors 7 auf.

Dadurch, dass vorschlagsgemäß vorgesehen ist, dass das Stellelement 3 den Aktor 7 und/oder den Energiespeicher 8 und/oder die Steuereinheit 9 zumindest teilweise umgibt, kann eine ganz besonders kompakte Bauweise der Verstelleinheit 2 erzielt werden. Hierdurch ist es möglich, eine Verstelleinheit 2 bereitzustellen, welche sich, wie in den Ausführungsbeispielen gezeigt, gut in die Optik einer Sanitärvorrichtung 10 integriert und insofern keinen "optischen" Fremdkörper in einem Badezimmer darstellt. Vorzugsweise wird die vorschlagsgemäße Verstelleinheit 2 als Nachrüstsatz bei einer Sanitärarmatur 1 anstelle einer Verstelleinheit 2 zur rein manuelle Verstellung verwendet.

Eine besonders kompakte Ausgestaltung kann grundsätzlich dadurch erreicht werden, dass das Stellelement 3 den Aktor 7 und/oder den Energiespeicher 8 und/oder die Steuereinheit 9 ganz umgibt. Dies ist für alle drei vorgenannten Bauteile in den Ausführungsbeispielen der Fig. 2 und 3 gezeigt.

Beim Verstellen der Sanitärarmatur 1 mittels des Aktors 7 der Verstelleinheit 2 wird hier und vorzugsweise das Stellelement 3 mit verstellt. Hierdurch kann der Benutzer auf besonders intuitive Art nachvollziehen, was für eine motorische Verstellung der Sanitärarmatur 1 erfolgt, da er eine zur manuellen Verstellung korrespondierende Verstellung des Stellelements 3 sieht.

Besonders bewährt hat es sich, wenn die Verstelleinheit 2 ein Gehäuse 11 aufweist. Hier und vorzugsweise ist es so, dass das Stellelement 3 zumindest einen Teil des Gehäuses 11 der Verstelleinheit 2 bildet und/oder dass das Stellelement 3 die Stellgliedschnittstelle 4 umgibt. Im Ausführungsbeispiel der Fig. 3 und vorzugsweise sind das Stellelement 3 und die Stellgliedschnittstelle 4 einstückig miteinander verbunden.

Wie in der Fig. 1 gezeigt, kann die äußere Oberfläche des Stellelements 3 im bestimmungsgemäß montierten Zustand der Verstelleinheit 2 mindestens 30 %, vorzugsweise mindestens 50 %, weiter vorzugsweise mindestens 70 %, der Oberfläche des von außen sichtbaren Gehäuses 11 der Verstelleinheit 2 bilden.

Dies ermöglicht hier und vorzugsweise beispielsweise eine Ausbildung des Stellelements 3 im Wesentlichen als drehbarer Stellring und/oder Stellknauf. In dem Ausführungsbeispiel der Fig. 2 ist das Stellelement 3 als drehbarer Stellring ausgebildet. In dem Ausführungsbeispiel der Fig. 3 und vorzugsweise ist das Stellelement 3 dagegen als kappenförmiger Stellknauf ausgebildet. Für die beiden Ausfiihrungsbeispiele kommt es nicht darauf an, ob das Stellelement 3 als Stellring oder Stellknauf ausgebildet ist. Grundsätzlich kann das Stellelement 3 der Fig. 2 auch als Stellknauf ausgebildet sein bzw. das Stellelement 3 der Fig. 3 als Stellring.

Ferner kann die Verstelleinheit einen Sensor 12 aufweisen, welcher eine Stellung und/oder Bewegung des Stellelements 3 erfasst. Hierdurch kann die Stellung des Stellelements 3, insbesondere in Relation zum Festlager 6, durch die Steuereinheit 9 ermittelt werden.

Es kann vorgesehen sein, dass die Stellgliedschnittstelle 4 als Schnittstelle zu einer Wellenverzahnung 13 des Stellglieds 5, welches insbesondere eine verzahnte Welle ist, ausgebildet ist. Die Stellgliedschnittstelle 4 und das Stellglied 5 bilden hier eine Steckverzahnung.

Befestigt wird die Verstelleinheit 2 hier und vorzugsweise durch ein, sich insbesondere mittig durch die Verstelleinheit 2 erstreckendes, Befestigungsmittel 14 an der Sanitärarmatur 1. In den Ausführungsbeispielen erfolgt die Befestigung am Stellglied 5. Als Befestigungsmittel 14 dient eine Schraube. Das Befestigungsmittel 14 erstreckt sich hier und vorzugsweise parallel, insbesondere koaxial, zur Längsachse des Stellglieds 5.

Die Festlegeschnittstelle 6 ist vorzugsweise an einem drehfesten Chassis der Verstelleinheit 2 ausgebildet. Dieses Chassis kann einen Teil des Gehäuses 11 bilden.

Die Festlegeschnittstelle 6 greift hier und vorzugsweise wie in den Ausführungsbeispielen gezeigt an der Sanitärarmatur 1 an. Zusätzlich oder alternativ kann die Festlegeschnittstelle 6 jedoch auch an einer eine Öffnung 15 in einer Wand 16 abdeckenden Blende 17 und/oder an einer Wand 16 angreifen. Wichtig ist, dass die Festlegeschnittstelle 6 eine drehfeste Verbindung zwischen der Verstelleinheit 2 und der Sanitärarmatur 1 herstellt. Bei der Blende 17 handelt es sich vorzugsweise, wie in der Fig. 1 gezeigt, um eine, insbesondere runde, Rosette.

Wie eingangs bereits dargelegt und in den Ausführungsbeispielen der Fig. 2 und 3 gezeigt, umgibt das Stellelement 3 den Aktor 7 und/oder den Energiespeicher 8 und/oder die Steuereinheit 9 zumindest radial im Wesentlichen vollständig. Es kann jedoch auch vorgesehen sein, dass der Aktor 7 und/oder der Energiespeicher 8 und/oder die Steuereinheit 9 zumindest zum Teil in und/oder hinter einer Blende 17 der Sanitärarmatur 1 angeordnet sind. Mit "hinter einer Blende 17" ist hier auf einer von dem Stellelement 3 abgewandten Seite der Blende 17 gemeint.

Besonders bevorzugt ist es, wenn wie in der Fig. 3 gezeigt, der Aktor 7 und/oder der Energiespeicher 8 und/oder die Steuereinheit 9 zumindest zum Teil mitdrehend im Stellelement 3 aufgenommen sind. Alternativ kann jedoch auch, wie im Ausführungsbeispiel der Fig. 2 gezeigt, der Aktor 7 und/oder der Energiespeicher 8 und/oder die Steuereinheit 9 drehfest in der Verstelleinheit 2 aufgenommen sein.

Wie in den Fig. 2 und 3 gezeigt, weist die Verstelleinheit 2 ein Getriebe 18 zur Übersetzung der Antriebskraft des Aktors 7 auf. Hier und vorzugsweise übersetzt das Getriebe 18 die Bewegung des Aktors 7 ins Langsame. In den Ausfiihrungsbeispielen ist das Getriebe 18 ein Zahnradgetriebe. Es kann insbesondere auch ein Planetengetriebe und/oder ein Harmonic Drive sein und/oder umfassen. Um ein besonders kompaktes Design zu ermöglichen, kann das Stellelement 3 eine Innenverzahnung aufweisen, welche einen Teil des Getriebes 18 ausbildet. Dies ist in der Fig. 2 gezeigt. Der Aktor 7 und/oder das Getriebe 18 sind vorzugsweise nicht selbsthemmend ausgebildet. Auch das Getriebe 18 wird hier von dem Stellelement 3 radial umgeben.

Die Steuerung der Verstelleinheit 2 mittels der Steuereinheit 9 erfolgt hier und vorzugsweise kennfeldbasiert. Dazu wird vorzugsweise nach der Montage die Temperatur für verschiedene Stellungen des Stellglieds 5 der Sanitärarmatur 1 eingeteacht. Hierdurch wird eine temperaturfühlerfreie Ausgestaltung der Verstelleinheit und damit ein besonders einfacher Aufbau ermöglicht.

Hier und vorzugsweise weist das Gehäuse 11, insbesondere das Stellelement 3, und/oder das Chassis eine lösbare, insbesondere frontseitige, Kappe 19 auf. Vorzugweise ist die Kappe 19 über eine Schnappverbindung an dem Gehäuse 11 im Übrigen, insbesondere dem Stellelement 3 im Übrigen, und/oder dem Chassis befestigt. In dem Ausführungsbeispiel der Fig. 2 ist die Kappe 19 feststehend ausgebildet. Sie ist hier an dem Chassis befestigt. Im Ausführungsbeispiel der Fig. 3 bildet die Kappe 19 dagegen einen Teil des Stellelements 3. Sie ist am Stellelement 3 im Übrigen befestigt. Hier dreht die Kappe 19 mit dem Stellelement 3 mit. Grundsätzlich kann bei dem Ausführungsbeispiel der Fig. 2 auch eine mitdrehende Kappe und/oder bei dem Ausführungsbeispiel der Fig. 3 eine feststehende Kappe vorgesehen sein.

In den Ausführungsbeispielen verdeckt die Kappe 19 das Befestigungsmittel 14. Durch das Lösen der Kappe 19 wird das Befestigungsmittel 14 zur Montage und/oder Demontage zugänglich. Ferner wird hier und vorzugsweise der Energiespeicher 8 zum Austauschen durch das Lösen der Kappe 19 zugänglich. Der Energiespeicher 8 ist hier mindestens eine Batterie.

Zur Interaktion mit einem Benutzer weist die Verstelleinheit 2 hier und vorzugsweise eine Benutzerschnittstelle 20 auf. Die Benutzerschnittstelle 20 ist hier im Gehäuse 11 ausgebildet. Sie ist, wie in den Fig. 2 und 3 gezeigt, im bestimmungsgemäß montierten Zustand der Verstelleinheit 2 an der Sanitärarmatur 1 an der Frontseite des Gehäuses 11, hier und vorzugsweise an oder hinter der Kappe 19, ausgebildet.

Im Ausführungsbeispiel kann die Benutzerschnittstelle 20 eine Anzeige 21 und/oder Tasten umfassen. Die Anzeige 21 kann Statusleuchten und/oder ein Display 22, insbesondere ein Touchscreen-Display, umfassen.

Ferner kann die Verstelleinheit 2 eine Force-Feedback-Einheit 23 aufweisen, welche dem Benutzer eine haptische Rückmeldung gibt. Hierdurch wird eine besonders intuitive Bedienung der Verstelleinheit 2 ermöglicht. Eine solche Force-Feedback-Einheit 23 kann beispielsweise analog zu einem Vibrationsalarm eines Handys vibrieren, um eine Bestätigung eines eingegebenen Befehls für den Benutzer spürbar zu machen.

Hier und vorzugsweise weist die Verstelleinheit 2 ferner eine Funkschnittstelle 24, insbesondere eine bidirektionale Funkschnittstelle 24, auf. Zusätzlich oder alternativ kann die Verstelleinheit 2 eine kabelgebundene Schnittstelle, insbesondere zu einer Benutzerschnittstelle einer Sanitärarmatur 1, aufweisen. Solche Schnittstellen ermöglichen grundsätzlich eine Vernetzung der Verstelleinheit 2. Diese kann mit anderen Verstelleinheiten 2, vorzugsweise ebenfalls vorschlagsgemäßen Verstelleinheiten 2, wie diese hier beschrieben sind, und/oder mit Peripheriesystemen erfolgen. Hierdurch kann die Verstelleinheit in Clouddienste und/oder Hausautomatisierungen eingebunden werden. Ein Peripheriesystem kann beispielsweise also eine Hausautomatisierungssteuerung sein.

Die Steuereinheit 9 und/oder die Benutzerschnittstelle 20, ggf. mit der Anzeige 21, und/oder die Funkschnittstelle 24 sind hier und vorzugsweise auf einer Platine 26 angeordnet. Diese kann im Stellelement 3 und/oder in der Kappe 19 aufgenommen sein.

Besonders bevorzugt weist die Verstelleinheit 2 ferner einen Szenengenerator 25 auf. Zusätzlich oder alternativ kann die Verstelleinheit 2 über die Funkschnittstelle 24 und/oder die kabelgebundene Schnittstelle mit einem Szenengenerator verbindbar sein.

Mit einem solchen Szenengenerator 25 können beispielsweise vorbestimmte Wasserfolgen und/oder Temperaturfolgen und/oder Lichtfolgen einer Sanitärvorrichtung 10, insbesondere Duschvorrichtung und/oder Badevorrichtung, gesteuert werden.

Dazu sind vorzugsweise Szenen, welche eine Wasserfolge und/oder eine Temperaturfolge und/oder Lichtfolge aufweisen, in einem Speicher abgelegt. Diese können fest im Speicher abgelegt sein oder von einem Benutzer programmiert werden.

Während einer Szene steuert der Szenengenerator ein oder mehrere Regelventile vorzugsweise in der Weise, dass Düsen an- und ausgeschaltet werden. Zusätzlich oder alternativ kann der Szenengenerator ein oder mehrere Regelventile in der Weise ansteuern, dass die Temperatur des aus der Düse oder den Düsen austretenden Wassers verstellt wird. Sequentiell und/oder gleichzeitig kann ggf. von dem Szenengenerator 24 eine Beleuchtung angesteuert werden, um Lichtfolgen zu erzeugen. Dazu kann der Szenengenerator zum Ein- und/oder Ausschalten und/oder zum Ändern der Helligkeit und/oder zum Ändern der Farbe Befehle für die Beleuchtung erzeugen.

Die Verstelleinheit kann an Sanitärarmaturen 1 unterschiedlichster Sanitärvorrichtungen 10 Anwendung finden, insbesondere an Duschvorrichtungen und/oder Badevorrichtungen.

Die Sanitärarmatur 1 kann dabei unterschiedlich ausgebildet sein. Beispielsweise kann sie verschiedene Regelventile aufweisen. Mit der Verstelleinheit 2 kann zum Beispiel ein Regelventil einer Mischeinrichtung einer Sanitärarmatur 1 zur Einstellung der Temperatur verstellt werden. Zusätzlich oder alternativ kann mit der oder einer weiteren Verstelleinheit 2 ein Regelventil der Sanitärarmatur 1 zur Einstellung der Durchflussmenge und/oder ein Regelventil der Sanitärarmatur zur Ansteuerung der Auslassdüsen einer Sanitärvorrichtung 10 verstellt werden. Die Verstelleinheit 2 weist hier und vorzugsweise einen Sensor zur Erfassung einer Stellung des Stellelements 3 auf.

## Patentansprüche

1. Verstelleinheit für eine Sanitärarmatur (1) zum Regeln einer Durchflussmenge von Wasser und/oder einer Wassertemperatur, wobei die Verstelleinheit (2) ein Stellelement (3) zum manuellen Verstellen der Sanitärarmatur (1), eine Stellgliedschnittstelle (4) zum Angreifen an ein Stellglied (5) zur Verstellung der Sanitärarmatur (1), eine Festlegeschnittstelle (6) zum Herstellen einer drehfesten Verbindung zwischen der Verstelleinheit (2) und der Sanitärarmatur (1), einen Aktor (7) zum, vorzugsweise motorischen, Verstellen der Sanitärarmatur (1), einen Energiespeicher (8) zur Energieversorgung des Aktors (7) und eine Steuereinheit (9) zum Steuern und/oder Regeln des Aktors (7) aufweist,
**dadurch gekennzeichnet,**
**dass** das Stellelement (3) den Aktor (7) und/oder den Energiespeicher (8) und/oder die Steuereinheit (9) zumindest radial bezogen auf das Stellglied (5) im Wesentlichen vollständig umgibt.

2. Verstelleinheit nach Anspruch 1, **dadurch gekennzeichnet, dass** die Verstelleinheit (2) ein Gehäuse (11) aufweist, vorzugsweise, dass das Stellelement (3) zumindest einen Teil des Gehäuses (11) der Verstelleinheit (2) bildet, und/oder, dass das Stellelement (3) die Stellgliedschnittstelle (4) umgibt.

3. Verstelleinheit nach Anspruch 1 oder 2, **dadurch gekennzeichnet, dass** die äußere Oberfläche des Stellelements (3) im bestimmungsgemäß montierten Zustand der Verstelleinheit (2) mindestens 30%, vorzugsweise mindestens 50%, weiter vorzugsweise mindestens 70%, der Oberfläche des von außen sichtbaren Gehäuses (11) der Verstelleinheit bildet.

4. Verstelleinheit nach einem der vorhergehenden Ansprüche, **dadurch gekennzeichnet, dass** das Stellelement (3) im Wesentlichen als drehbarer Stellring oder Stellknauf ausgebildet ist.

5. Verstelleinheit nach einem der vorhergehenden Ansprüche, **dadurch gekennzeichnet, dass** die Stellgliedschnittstelle (4) als Schnittstelle zu einer Wellenverzahnung (13) des Stellglieds (5), welches insbesondere eine verzahnte Welle ist, ausgebildet ist, und/oder, dass die Verstelleinheit (2) durch ein, sich insbesondere mittig durch die Verstelleinheit (2) erstreckendes, Befestigungsmittel (14) an der Sanitär-armatur (1), insbesondere dem Stellglieds (5), befestigt ist.

6. Verstelleinheit nach einem der vorhergehenden Ansprüche, **dadurch gekennzeichnet, dass** die Festlegeschnittstelle (6) an der Sanitärarmatur (1) und/oder an einer eine Öffnung (15) in einer Wand (16) abdeckenden Blende (17) und/oder an einer Wand (16) zum Herstellen einer drehfesten Verbindung zwischen der Verstelleinheit (2) und der Sanitärarmatur (1) angreift.

7. Verstelleinheit nach einem der vorhergehenden Ansprüche, **dadurch gekennzeichnet, dass** der Aktor (7) und/oder der Energiespeicher (8) und/oder die Steuereinheit (9) zumindest zum Teil in und/oder hinter einer Blende (17) der Sanitärarmatur (1) angeordnet ist.

8. Verstelleinheit nach einem der vorhergehenden Ansprüche, **dadurch gekennzeichnet, dass** der Aktor (7) und/oder der Energiespeicher (8) und/oder die Steuereinheit (9) mitdrehend im Stellelement (3) aufgenommen ist und/oder dass der Aktor (7) und/oder der Energiespeicher (8) und/oder die Steuereinheit (9) drehfest in der Verstelleinheit (2) aufgenommen ist.

9. Verstelleinheit nach einem der vorhergehenden Ansprüche, **dadurch gekennzeichnet, dass** die Verstelleinheit (2) ein Getriebe (18) zur Übersetzung der Antriebskraft des Aktors (7) aufweist, vorzugsweise, dass das Getriebe (18) ein Zahnradgetriebe und/oder ein Planetengetriebe und/oder ein Harmonic Drive ist oder aufweist, weiter vorzugsweise, dass das Stellelement (3) eine Innenverzahnung aufweist, welche einen Teil des Getriebes (18) ausbildet.

10. Verstelleinheit nach einem der vorhergehenden Ansprüche, **dadurch gekennzeichnet, dass** die Verstelleinheit (2) eine Benutzerschnittstelle (20) aufweist, vorzugsweise, dass die Benutzerschnittstelle (20) im Gehäuse (11) ausgebildet ist, weiter vorzugsweise, dass die Benutzerschnittstelle (20) im bestimmungsgemäß montierten Zustand der Verstelleinheit (2) an der Sanitärarmatur (1) auf der Frontseite des Gehäuses ausgebildet ist.

11. Verstelleinheit nach einem der vorhergehenden Ansprüche, **dadurch gekennzeichnet, dass** die Verstelleinheit (2) eine Force-Feedback-Einheit (23) aufweist, welche dem Bediener bei der Bedienung eine haptische Rückmeldung gibt.

12. Verstelleinheit nach einem der vorhergehenden Ansprüche, **dadurch gekennzeichnet, dass** die Verstelleinheit (2) eine Funk-Schnittstelle (24), insbesondere bi-direktionale Funk-Schnittstelle, aufweist und/oder dass die Verstelleinheit (2) eine kabelgebundene Schnittstelle, insbesondere zu einer Benutzerschnittstelle einer Sanitärarmatur, aufweist.

13. Verstelleinheit nach einem der vorhergehenden Ansprüche, **dadurch gekennzeichnet, dass** die Verstelleinheit (2) einen Szenengenerator (25) aufweist und/oder über die Funk-Schnittstelle (24) und/oder die kabelgebundene Schnittstelle mit einem Szenengenerator (25) verbindbar ist, vorzugsweise, dass der Szenengenerator (25) Wasserfolgen und/oder Temperaturfolgen und/oder Lichtfolgen steuert.

14. Verstelleinheit nach einem der vorhergehenden Ansprüche, **dadurch gekennzeichnet, dass** die Verstelleinheit (2) im bestimmungsgemäß montierten Zustand an der Sanitärarmatur (1) wasserabweisend und/oder wasserdicht, vorzugsweise nach IP 44, weiter vorzugsweise nach IP 65, weiter vorzugsweise nach IP 67, ausgebildet ist.

15. Sanitärarmatur mit mindestens einer Verstelleinheit (2), **dadurch gekennzeichnet, dass** die mindestens eine Verstelleinheit (2) oder mindestens eine der Verstelleinheiten (2) nach einem der vorhergehenden Ansprüche ausgebildet ist.

16. Sanitärarmatur nach Anspruch 15, **dadurch gekennzeichnet, dass** mit der Verstelleinheit (2) ein Regelventil einer Mischeinrichtung der Sanitärarmatur (1) zur Einstellung der Temperatur verstellbar ist,
und/oder,
dass mit der Verstelleinheit (2) oder einer weiteren Verstelleinheit (2) ein Regelventil der Sanitärarmatur (1) zur Einstellung der Durchflussmenge verstellbar ist, und/oder,
mit der Verstelleinheit (2) oder einer weiteren Verstelleinheit (2) ein Regelventil der Sanitärarmatur (1) zur Ansteuerung der Auslassdüsen einer Sanitärvorrichtung verstellbar ist.

17. Sanitärvorrichtung, insbesondere Duschvorrichtung und/oder Badevorrichtung, **gekennzeichnet durch** eine Verstelleinheit (2) nach einem der Ansprüche 1 bis 14 und/oder eine Sanitärarmatur (1) nach einem der Ansprüche 15 oder 16.

## Claims

1. Adjusting unit for a sanitary fitting (1) for controlling a flow rate of water and/or a water temperature, wherein the adjusting unit (2) has an adjusting element (3) for manually adjusting the sanitary fitting (1), an adjuster interface (4) for acting on an adjuster (5) for adjusting the sanitary fitting (1), a fastening interface (6) for producing a co-rotational connection between the adjusting unit (2) and the sanitary fitting (1), an actuator (7) for the preferably motorized adjustment of the sanitary fitting (1), an energy store (8) for the energy supply of the actuator (7) and a control unit (9) for controlling and/or regulating the actuator (7),
**characterized in that**
the adjusting element (3) substantially completely surrounds the actuator (7) and/or the energy store (8) and/or the control unit (9) at least radially in relation to the adjuster (5).

2. Adjusting unit according to Claim 1, **characterized in that** the adjusting unit (2) has a housing (11), preferably **in that** the adjusting element (3) forms at least part of the housing (11) of the adjusting unit (2), and/or **in that** the adjusting element (3) surrounds the adjuster interface (4).

3. Adjusting unit according to Claim 1 or 2, **characterized in that** in the intended mounted state of the adjusting unit (2) the outer surface of the adjusting element (3) forms at least 30%, preferably at least 50%, more preferably at least 70%, of the surface of the externally visible housing (11) of the adjusting unit.

4. Adjusting unit according to one of the preceding claims, **characterized in that** the adjusting element (3) is substantially formed as a rotatable adjusting ring or adjusting knob.

5. Adjusting unit according to one of the preceding claims, **characterized in that** the adjuster interface (4) is designed as an interface to shaft toothing (13) of the adjuster (5), which is in particular a toothed shaft, and/or **in that** the adjusting unit (2) is fastened to the sanitary fitting (1), in particular the adjuster (5), by a fastening means (14) extending in particular centrally through the adjusting unit (2).

6. Adjusting unit according to one of the preceding claims, **characterized in that** the fastening interface (6) acts on the sanitary fitting (1) and/or on a panel (17) covering an opening (15) in a wall (16) and/or on a wall (16) to produce a co-rotational connection between the adjusting unit (2) and the sanitary fitting (1).

7. Adjusting unit according to one of the preceding claims, **characterized in that** the actuator (7) and/or the energy store (8) and/or the control unit (9) is at least partly arranged in and/or behind a panel (17) of the sanitary fitting (1).

8. Adjusting unit according to one of the preceding claims, **characterized in that** the actuator (7) and/or the energy store (8) and/or the control unit (9) are accommodated co-rotationally in the adjusting element (3), and/or **in that** the actuator (7) and/or the energy store (8) and/or the control unit (9) are accommodated co-rotationally in the adjusting unit (2).

9. Adjusting unit according to one of the preceding claims, **characterized in that** the adjusting unit (2) has a gear mechanism (18) for translating the drive force of the actuator (7), preferably **in that** the gear mechanism (18) is or has a toothed gear mechanism and/or a planetary gear mechanism and/or a harmonic drive, more preferably **in that** the adjusting element (3) has internal toothing which forms part of the gear mechanism (18).

10. Adjusting unit according to one of the preceding claims, **characterized in that** the adjusting unit (2) has a user interface (20), preferably **in that** the user interface (20) is formed in the housing (11), more preferably **in that** in the intended mounted state of the adjusting unit (2) on the sanitary fitting (1), the user interface (20) is formed on the front side of the housing.

11. Adjusting unit according to one of the preceding claims, **characterized in that** the adjusting unit (2) has a force feedback unit (23), which gives the user haptic feedback during operation.

12. Adjusting unit according to one of the preceding claims, **characterized in that** the adjusting unit (2) has a radio interface (24), in particular a bidirectional radio interface, and/or **in that** the adjusting unit (2) has a wired interface, in particular to a user interface of a sanitary fitting.

13. Adjusting unit according to one of the preceding claims, **characterized in that** the adjusting unit (2) has a scene generator (25) and/or can be connected to a scene generator (25) via the radio interface (24) and/or the wired interface, preferably **in that** the scene generator (25) controls water sequences and/or temperature sequences and/or light sequences.

14. Adjusting unit according to one of the preceding claims, **characterized in that** in the intended mounted state on the sanitary fitting (1), the adjusting unit (2) is designed to be water-repellent and/or water-tight, preferably to IP 44, more preferably to IP 65, more preferably to IP 67.

15. Sanitary fitting having at least one adjusting unit (2), **characterized in that** the at least one adjusting unit (2) or at least one of the adjusting units (2) is designed according to one of the preceding claims.

16. Sanitary fitting according to Claim 15, **characterized in that** a regulating valve of a mixing device of the sanitary fitting (1) for setting the temperature is adjustable by the adjusting unit (2), and/or
**in that** a regulating valve of the sanitary fitting (1) for adjusting the flow rate is adjustable by the adjusting unit (2) or a further adjusting unit (2), and/or
a regulating valve of the sanitary fitting (1) for activating the outlet nozzles of a sanitary device is adjustable by the adjusting unit (2) or a further adjusting unit (2).

17. Sanitary device, in particular a shower device and/or bathing device, **characterized by** an adjusting unit (2) according to one of Claims 1 to 14 and/or a sanitary fitting (1) according to either of Claims 15 and 16.

## Revendications

1. Unité de réglage d'une robinetterie sanitaire (1) destinée à réguler un débit d'eau et/ou une température d'eau, l'unité de réglage (2) comportant un élément de réglage (3) destiné à régler manuellement la robinetterie sanitaire (1), une interface d'organe de réglage (4) destinée à agir sur un organe de réglage (5) afin de régler la robinetterie sanitaire (1), une interface de fixation (6) destinée à réaliser une liaison solidaire en rotation entre l'unité de réglage (2) et la robinetterie sanitaire (1), un actionneur (7) destiné à régler, de préférence par moteur, la robinetterie sanitaire (1), un accumulateur d'énergie (8) destiné à alimenter en énergie l'actionneur (7), et une unité de commande (9) destinée à commander et/ou réguler l'actionneur (7),
**caractérisée en ce que**
l'élément de réglage (3) entoure sensiblement complètement l'actionneur (7) et/ou l'accumulateur d'énergie (8) et/ou l'unité de commande (9) au moins radialement par rapport à l'organe de réglage (5).

2. Unité de réglage selon la revendication 1, **caractérisée en ce que** l'unité de réglage (2) comporte un boîtier (11), de préférence **en ce que** l'élément de réglage (3) forme au moins une partie du boîtier (11) de l'unité de réglage (2) et/ou **en ce que** l'élément de réglage (3) entoure l'interface d'organe de réglage (4) .

3. Unité de réglage selon la revendication 1 ou 2, **caractérisée en ce que**, lorsque l'unité de réglage (2) est installée comme prévu, la surface extérieure de l'élément de réglage (3) couvre au moins 30 %, de préférence au moins 50 %, plus préférablement au moins 70 %, de la surface du boîtier (11), visible de l'extérieur, de l'unité de réglage.

4. Unité de réglage selon l'une des revendications précédentes, **caractérisée en ce que** l'élément de réglage (3) est conçu sensiblement comme une bague de réglage rotative ou un bouton de réglage rotatif.

5. Unité de réglage selon l'une des revendications précédentes, **caractérisée en ce que** l'interface d'organe de réglage (4) est conçue comme une interface avec une denture d'arbre (13) de l'organe de réglage (5) qui est notamment un arbre denté et/ou **en ce que** l'unité de réglage (2) est fixée à la robinetterie sanitaire (1), en particulier l'organe de réglage (5), par un moyen de fixation (14) qui s'étend notamment au milieu à travers l'unité de réglage (2).

6. Unité de réglage selon l'une des revendications précédentes, **caractérisée en ce que** l'interface de fixation (6) est appliquée sur la robinetterie sanitaire (1) et/ou sur un diaphragme (17) recouvrant une ouverture (15) ménagée dans une paroi (16) et/ou sur une paroi (16) destinée à réaliser une liaison solidaire en rotation entre l'unité de réglage (2) et la robinetterie sanitaire (1).

7. Unité de réglage selon l'une des revendications précédentes, **caractérisée en ce que** l'actionneur (7) et/ou l'accumulateur d'énergie (8) et/ou l'unité de commande (9) est/sont disposé(s) au moins en partie dans et/ou derrière un diaphragme (17) de la robinetterie sanitaire (1).

8. Unité de réglage selon l'une des revendications précédentes, **caractérisée en ce que** l'actionneur (7) et/ou l'accumulateur d'énergie (8) et/ou l'unité de commande (9) est/sont logé(s) à rotation dans l'élément de réglage (3) et/ou **en ce que** l'actionneur (7) et/ou l'accumulateur d'énergie (8) et/ou l'unité de commande (9) est/sont logé(s) solidairement en rotation dans l'unité de réglage (2).

9. Unité de réglage selon l'une des revendications précédentes, **caractérisée en ce que** l'unité de réglage (2) comporte une transmission (18) destinée à augmenter la force d'entraînement de l'actionneur (7), de préférence **en ce que** la transmission (18) est ou comporte une transmission à roues dentées et/ou un engrenage planétaire et/ou un entraînement harmonique, plus préférablement **en ce que** l'élément de réglage (3) comporte une denture intérieure qui fait partie de la transmission (18).

10. Unité de réglage selon l'une des revendications précédentes, **caractérisée en ce que** l'unité de réglage (2) comporte une interface utilisateur (20), de préférence **en ce que** l'interface utilisateur (20) est formée dans le boîtier (11), plus préférablement **en ce que**, lorsque l'unité de réglage (2) est installée comme prévu sur la robinetterie sanitaire (1), l'interface utilisateur (20) est formée du côté avant du boîtier.

11. Unité de réglage selon l'une des revendications précédentes, **caractérisée en ce que** l'unité de réglage (2) comporte une unité de retour de force (23) qui donne à l'opérateur un retour haptique pendant l'opération.

12. Unité de réglage selon l'une des revendications précédentes, **caractérisée en ce que** l'unité de réglage (2) comporte une interface radio (24), notamment une interface radio bidirectionnelle, et/ou **en ce que** l'unité de réglage (2) comporte une interface filaire, notamment avec une interface utilisateur d'une robinetterie sanitaire.

13. Unité de réglage selon l'une des revendications précédentes, **caractérisée en ce que** l'unité de réglage (2) comporte un générateur de scènes (25) et/ou peut être reliée à un générateur de scènes (25) par e biais de l'interface radio (24) et/ou de l'interface filaire, de préférence **en ce que** le générateur de scène (25) commande des séquences d'eau et/ou des séquences de température et/ou des séquences de lumière.

14. Unité de réglage selon l'une des revendications précédentes, **caractérisée en ce que**, lorsqu'elle est installée comme prévu sur la robinetterie sanitaire (1), l'unité de réglage (2) est conçue pour être hydrofuge et/ou étanche à l'eau, de préférence selon IP 44, plus préférablement selon IP 65, plus préférablement selon IP 67.

15. Robinetterie sanitaire comprenant au moins une unité de réglage (2), **caractérisée en ce que** l'au moins une unité de réglage (2) ou l'une au moins des unités de réglage (2) est conçue selon l'une des revendications précédentes.

16. Robinetterie sanitaire selon la revendication 15, **caractérisée en ce que** l'unité de réglage (2) permet de régler une vanne de régulation d'un dispositif mélangeur de la robinetterie sanitaire (1) afin de régler pour régler la température,
et/ou,
**en ce que** l'unité de réglage (2) ou une autre unité de réglage (2) permet de régler une vanne de régulation de la robinetterie sanitaire (1) afin de régler le débit, et/ou
l'unité de réglage (2) ou une autre unité de réglage (2) permet de régler une vanne de régulation de la robinetterie sanitaire (1) afin de commander les buses de sortie d'un dispositif sanitaire.

17. Dispositif sanitaire, notamment dispositif de douche et/ou dispositif de bain, **caractérisé par** une unité de réglage (2) selon l'une des revendications 1 à 14 et/ou une robinetterie sanitaire (1) selon l'une des revendications 15 ou 16.
